# EUROPÄISCHE PATENTSCHRIFT

(11) **EP 3 410 064 B1**
(45) Veröffentlichungstag und Bekanntmachung des Hinweises auf die Patenterteilung: **09.08.2023**
(21) Anmeldenummer: 17198928.8
(22) Anmeldetag: 04.02.2014
(51) Int. Cl.: G01C 15/02, G01B 11/00, G01C 21/16, G01C 21/20, G01S 5/16, G06F 17/40, G06T 7/00, H04N 5/33, H04N 7/18, G06T 7/73, G01N 21/88, H04N 13/246, H04N 13/239, G01B 17/02

(54) **INSPEKTIONSKAMERAEINHEIT, VERFAHREN ZUR INSPEKTION VON INNENRÄUMEN SOWIE SENSOREINHEIT**
INSPECTION CAMERA UNIT, METHOD FOR INSPECTING INTERIOR SPACES AND SENSOR UNIT
UNITÉ DE CAMÉRA D'INSPECTION, PROCÉDÉ D'INSPECTION DES ESPACES INTÉRIEURS AINSI QU'UNITÉ DE CAPTEUR

(30) Priorität: 04.02.2013 DE 102013201769; 06.11.2013 DE 102013222570
(43) Veröffentlichungstag der Anmeldung: 05.12.2018
(62) Teilanmeldung aus: 14708813.2
(73) Patentinhaber: DNV GL SE, 20457 Hamburg (DE); Deutsches Zentrum für Luft- und Raumfahrt e.V., 51147 Köln (DE)
(72) Erfinder: Börner, Anko, 12489 Berlin (DE); Zuev, Sergey, 13088 Berlin (DE); Greißenbach, Denis, 10245 Berlin (DE); Baumbach, Dirk, 99091 Erfurt (DE); Buder, Maximilian, 16230 Meldow (DE); Choinowski, Andre, 12555 Berlin (DE); Wilken, Marc, 20457 Hamburg (DE); Cabos, Christian, 20457 Hamburg (DE)
(74) Vertreter: VKK Patentanwälte PartG mbB

(56) Entgegenhaltungen:
- US-A- 6 083 353
- US-A1- 2007 182 725
- US-A1- 2008 232 788
- US-A1- 2013 028 478
- Cheng Hong Yang: "Geometric Models in Stereoscopic Video", , 1. Januar 1995 (1995-01-01), XP055115790, Gefunden im Internet: URL:http://iss.bu.edu/data/jkonrad/reports /Yang95-12inrs.ps [gefunden am 2014-04-29]

## Beschreibung

Die Erfindung betrifft eine Vermessungsanordnung sowie ein Verfahren zur Vermessung, insbesondere von geschlossenen Räumen.

Die Inspektion von Industrieanlagen, Gebäuden, aber auch Schiffen, dient beispielsweise einer frühzeitigen Erkennung von Schäden und/oder der Gewährleistung einer Betriebssicherheit. Sensorsysteme, die die dafür benötigten Daten erfassen, können beispielsweise Kamerasysteme mit einem beliebigen Spektralbereich, Feuchtesensoren oder Gassensoren sein. Die von diesen Sensorsystemen erzeugten Daten können aber in der Regel nur dann sinnvoll und nutzbringend verwendet werden, wenn sie räumlich referenziert werden. D.h., dass zu jedem Messsignal auch eine Lage, also Position und/oder Orientierung, des Sensorsystems bekannt sein sollten.

Eine Lageerfassung mittels eines GNSS (globalen Navigationssatellitensystems) gewährleistet eine derartige räumliche Referenzierung von Messdaten in Außenbereichen mit einer Positionsgenauigkeit von einigen Zentimetern, z.B. bei Verwendung eines differentiellen GPS (Global Positioning System), bis zu einigen Metern. Die Bestimmung einer Orientierung ist mit GNSS nicht möglich. in geschlossenen Räumen, beispielsweise in Innenräumen von Gebäuden oder Fahrzeugen, insbesondere Schiffen, können eine Funktionsfähigkeit und die Genauigkeit des GNSS jedoch beeinträchtigt sein. Im Außenbereich kann die Qualität der Positionsmessung mittels GNSS bei ungünstigen Bedingungen beeinträchtigt sein, beispielsweise durch Abschattungen und Mehrfachreflexionen.

Für eine räumliche Referenzierung von Messdaten können beispielsweise terrestrische Mikrowellen-Sender- und Empfangseinheiten verwendet werden. So können beispielsweise RFID (Radio Frequency Identification)-Systeme, Pseudolite-Systeme oder WLAN-basierte Systeme zur räumlichen Referenzierung genutzt werden, erfordern aber eine entsprechende technische Ausrüstung der Messumgebung im Vorfeld der Messungen. Auch ist es möglich, Inertial-Messsysteme zu verwenden. Diese Systeme messen Winkelgeschwindigkeiten und Beschleunigungen, die durch Einfach- bzw. Zweifachintegration zu Orientierungs- und Positionswerten verarbeitet werden können. Durch dieses Prinzip werden schnell große Fehler akkumuliert, was nur durch die Verwendung von großen und teuren Inertialmesssystemen umgangen werden kann. Zusätzlich können auch kompassbasierte Systeme zum Einsatz kommen. All diese Systeme können in Innenräumen Anwendung finden. Karten, die im Vorfeld erstellt wurden (z.B. Gebäudegrundrisse, Elektrische-Feldstärke-Karten) finden oftmals Verwendung, um die Messwerte zu stützen.

Allen bekannten Verfahren zur räumlichen Referenzierung von Messdaten ohne GNSS ist gemein, dass sie a-priori-Informationen benötigen, z.B. durch Karten oder eine Ausrüstung des zu vermessenden Objekts mit entsprechenden technischen Hilfsmitteln, und teuer sind.

Ferner existieren Ansätze zur photogrammetrischen Verortung von Messdaten. Hierbei wird eine Vielzahl von räumlich überlappenden Bildern in einem zu untersuchenden Innenraumbereich aufgenommen. Hierbei ist problematisch, dass eine Verortung auf Grundlagen von photogrammetrischen Ansätzen nur bedingt echtzeitfähig ist, da in der Regel der gesamte Bildblock (vom ersten bis zum letzten Bild) vorliegen muss, um nachträglich die Trajektorie des Messsystems zu bestimmen und damit die räumliche Referenzierung der Messwerte sicherzustellen.

Die veröffentlichte US-Patentanmeldung US 2007/0182725 A1 hat die Erfassung von Handbewegungen zum Gegenstand. Eine transportable elektronische Vorrichtung, eine mit der transportablen Vorrichtung zugeordnete Digitalkamera und eine Software, die konfiguriert ist, um auf der transportablen elektronischen Vorrichtung zu laufen, um Handschrift und Steuerinformationen aus Handbewegungen von einem Schreibgerät in der Nähe der Digitalkamera herzuleiten. Zum Erfassen der Handbewegung werden in der US 2007/0182725 A1 unter anderen Eingabegeräte wie Trackballs, Mäuse, Lichtstifte, Digitalisiertablets und elektronische Stifte vorgeschlagen. In diesem Zusammenhang werden auch ein Drucksensor zur Erfassung des Aufdrückens beim Unterschreiben und der Dicke der (Schrift)linie und eine Lichtquelle sowie ein Kamerasensor offenbart.

In der Offenlegungsschrift der US-Patentanmeldung US 2013/028478 A1wird eine Inspektion von Objekten mit einem Sensor für eine volumetrische Analyse offenbart. Das Positionierverfahren und die Vorrichtung zur Positionsbestimmung zur zerstörungsfreien Inspektion eines Objekts schließen das Bereitstellen von mindestens einem Sensor zur volumetrischen Analyse ein, wobei der Sensor Bezugsmarken (reference targets) aufweist.

Die internationale Patentanmeldung WO 98/10246 A1, dessen Anmeldegegenstand auch als US-Patent US 6 083 353 veröffentlicht wurde, offenbart ein tragbares Handgerät zum Verwalten von geographische Daten sowie Verfahren zum effizienten und genauen Erfassen von Bilddaten und anderen Einsatzdaten unter Verwendung des tragbaren Handgeräts zum Verwalten von geographischen Daten (portable Geographie Data Manager, GDM). Die offenbarten GDMs verfügen über eine Kombination von GPS-Antennen und Empfängern, digitalen Kompassen, Neigungsmessern, Gyroskope und Digitalkameras, um Positionsdaten und andere geographische Daten und Informationen zu erfassen, zu verarbeiten und/oder zu speichern, welche zum Gegenstand einer Studie gehören.

Dem Fortschrittsbericht "Geometric Models in Stereoscopic Video" von Cheng Hong Yang, Universität von Quebec, Kanada lag das Ziel zugrunde, nützliche geographische Modelle für ein weitergehendes Studium der stereoskopischen Videoverarbeitung aufzuzeigen, wobei betreffende Problemstellungen nicht nur definiert, sondern auch mathematisch analysiert wurden. Ein weiteres Ziel ist, ein Verfahren zu entwickeln, um eine Vertikalparallaxe aufgrund von nicht parallel angeordneten Sensorebenen bei einem sogenannten toed-in Setups der Kamera zu eliminieren. Bei einem toed-in Setup der Kamera sind die beiden Sensorebenen der Kamera nicht parallel angeordnet, sondern befinden sich in möglicherweise unterschiedlichen Anstellwinkeln. Weiterhin werden einige stereoskopische Eigenschaften des menschlichen Sehsystems angeführt.

In der US-Patentanmeldung US 2008/232788 A1 (=D5) wird ein neigungsempfindlicher kameraprojizierter Sucher offenbart. Der neigungsempfindlicher kameraprojizierter Sucher zeigt einen Bereich einer Objektebene, der sich innerhalb der Sicht der Kamera befindet an, wobei ein sichtbares von der Kamera projiziertes Signal verwendet wird. Ein Orientierungssensor bestimmt die Orientierung der Kamera und verändert das sichtbare Signal mit einer Veränderung der Orientierung der Kamera. Veränderungen beim Auftreten des sichtbaren Signals geben Veränderungen des Sichtfelds der Kamera wieder und können in einer Speichereinheit gespeichert und zugehörigen Beschreibungsdaten der erfassten Bilder zugeordnet werden.

Es stellt sich das technische Problem, eine Vermessungsanordnung und ein Verfahren zur Vermessung zu schaffen, welche eine räumliche Referenzierung von Messdaten vereinfachen und eine zeitlich schnelle räumliche Referenzierung ermöglichen, wobei a-priori-Wissen, z.B. in Form von Karten oder zusätzliche Infrastruktur, nicht notwendig ist.

Die Lösung des technischen Problems ergibt sich durch die Gegenstände mit den Merkmalen der Ansprüche 1 und 9. Weitere vorteilhafte Ausgestaltungen ergeben sich aus den Unteransprüchen.

Nachfolgend gelten folgende Definitionen. Eine Lage beschreibt eine Position und/oder eine Orientierung eines Objekts zumindest teilweise. Eine Position kann beispielsweise durch drei Translationsparameter beschrieben werden. Z.B. können Translationsparameter einen x-Parameter, einen y-Parameter und einen z-Parameter in einem kartesischen Koordinatensystem umfassen. Eine Orientierung kann beispielsweise durch drei Rotationsparameter beschrieben werden. Z.B. können Rotationsparameter einen Drehwinkel ω um eine x-Achse, einen Drehwinkel ϕ um eine y-Achse und einen Drehwinkel κ um eine z-Achse des kartesischen Koordinatensystems umfassen. Somit kann eine Lage bis zu 6 Parameter umfassen.

Hinsichtlich der Sensoreinheit wird die der Erfindung zugrundeliegende Aufgabe durch eine Sensoreinheit mit Sensormitteln zur messtechnischen Erfassung mindestens einer Eigenschaft gelöst, welche zur Bestimmung einer durch relative Ortsdaten und Orientierungsdaten gekennzeichneten Lage des Sensorkopfes aufweist, wobei die Sensoreinheit zur Bestimmung der durch relative Ortsdaten und Orientierungsdaten gekennzeichneten Lage mit Referenzierungsmitteln einer Inspektionskameraeinheit zusammenwirkt. Die Sensoreinheit weist einen Ultraschalldickemesssensor als Sensormittel auf, zur ultraschallbasierten Messung der Dicke beispielsweise einer Stahlplatte eines Schiffsinnenraums. Dadurch, dass erfindungsgemäß die Sensoreinheit mit Lagegebermitteln versehen ist, kann in Zusammenwirken mit einer Inspektionskameraeinheit die Lage der Sensormittel, also die Lage des Ultraschalldickemesssensors, bestimmt werden. Auf diese Weise lässt sich mit Vorteil festhalten, an welchem Ort und in welcher Orientierung sich beispielsweise der Ultraschalldickemesssensor zum Zeitpunkt der Aufnahme des Messwertes befand. Dazu muss er bei der messtechnischen Erfassung der Dicke im Sichtfeld der Referenzierungsmittel der Inspektionskameraeinheit angeordnet sein.

In bevorzugter Ausgestaltung der erfindungsgemäßen Sensoreinheit umfassen die Lagegebermittel voneinander auf einer Sensorachse beabstandet angeordnete, einen optischen Kontrast hervorrufende, insbesondere punktartige, Bereiche. Diese Bereiche können im Rahmen der Erfindung mit Vorteil bei dem oben beschriebenen Bildvergleich der Bilder zweier Referenzierungskameras als Auswertemuster mit einem maximalen Kontrast herangezogen werden.

Die Lagegebermittel können in weiterer günstiger Ausgestaltung der Erfindung zuschaltbar ausgeschaltet sein.

Insbesondere weisen punktförmige Lichtquellen auf. Insbesondere ist der Lagegeber aus zwei voneinander beabstandet angeordneten Leuchtdioden aufgebaut, welche bei Auslösung der Speicherung eines Messsignals, d.h. einer Ultraschalldickemessung, kurzzeitig eingeschaltet werden, um auf diese Weise als Auswertemuster mit maximalem Kontrast von den Referenzierungskameras erfasst werden zu können.

Weitere Ausgestaltungen der Sensoreinheit ergeben sich aus den Unteransprüchen 2 bis 8.

Die Erfindung betrifft außerdem ein Verfahren zum Vermessen eines Objekts mit einer Sensoreinheit nach einem der Ansprüche 1 bis 8, wobei die Speichereinheit die Speicherung eines Messsignals des Sensorkopfes eines zu vermessenden Objekts auslöst und wobei die Leuchtdioden kurzzeitig eingeschaltet werden und Infrarotlicht abstrahlen.

Die Erfindung wird anhand eines Ausführungsbeispiels unter Bezugnahme auf eine Zeichnung näher erläutert.

Die Figuren der Zeichnung zeigen im Einzelnen:
Figur 1: ein schematisches Blockschaltbild einer Vermessungsanordnung.
Figur 1a: perspektivische schematische Ansicht einer Ausführungsform der erfindungsgemäßen Inspektionskameraeinheit;
Figur 2: beispielhafte Veranschaulichung eines Ausführungsbeispiels des von der Inspektionskameraeinheit gemäß Fig. 1a eingesetzten Bildverarbeitungsverfahrens;
Figur 3: schematische Darstellung der Veranschaulichung im Rahmen der Erfindung möglicher Ausgestaltungen einer Inspektionskameraeinheit;
Figur 4: beispielhafte Veranschaulichung einer Ausführung des erfindungsgemäßen Verfahrens;
Figur 5: schematische Veranschaulichung der Durchführung einer Dickenmessung mit einer erfindungsgemäßen Sensoreinheit im Zusammenwirken mit einer erfindungsgemäßen Inspektionskameraeinheit.

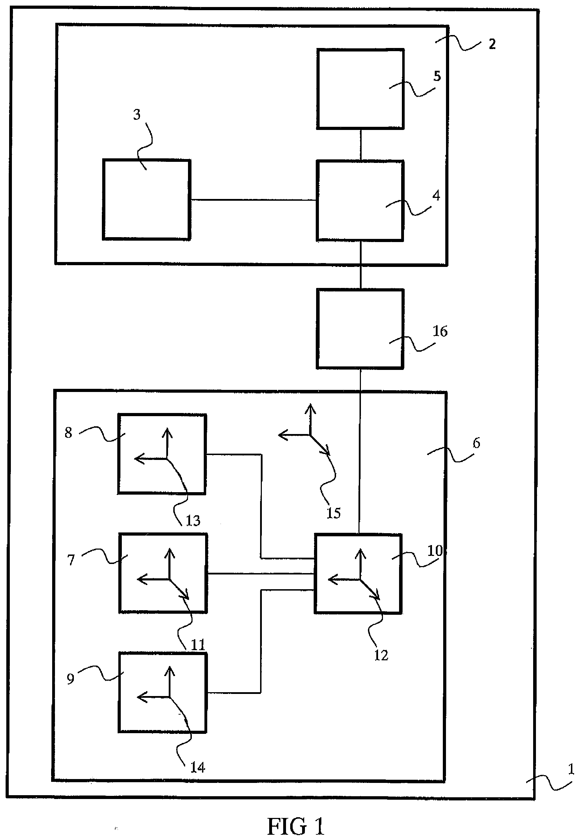

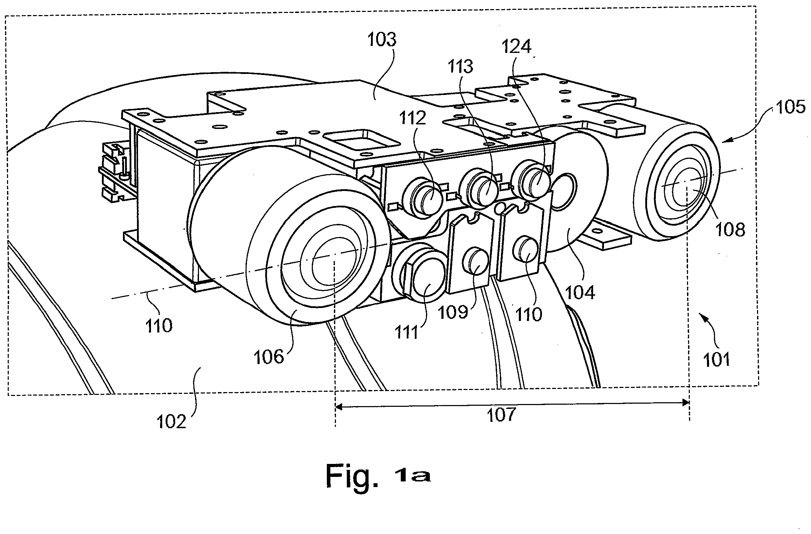

In Fig. 1 ist eine erfindungsgemäße Vermessungsanordnung 1 in einem schematischen Blockschaltbild dargestellt. Die Vermessungsanordnung 1 umfasst ein sensorisches System 2 zur Erzeugung von Messdaten. Das sensorische System 2 umfasst hierbei einen Sensor 3, z.B. einen Feuchtesensor. Weiter umfasst das sensorische System 2 eine Steuer- und Auswerteeinrichtung 4, die Ausgangssignale des Sensors 3 vorverarbeiten kann und einen Betrieb des Sensors 3 steuert. Weiter dargestellt ist, dass das sensorische System 2 eine Betätigungseinrichtung 5 zur Aktivierung des sensorischen Systems 2 oder der Vermessungsanordnung 1 umfasst, die beispielsweise als Schalter ausgebildet sein kann.

Weiter umfasst die Vermessungsanordnung 1 ein kombiniertes Lageerfassungssystem 6. Das kombinierte Lageerfassungssystem 6 umfasst als erstes unreferenziertes Lageerfassungssystem einen Inertialsensor 7. Weiter umfasst das kombinierte Lageerfassungssystem 6 als zweites unreferenziertes Lageerfassungssystem ein Stereokamerasystem, welches eine erste Kamera 8 und eine zweite Kamera 9 umfasst. Das erste unreferenzierte Lageerfassungssystem erfasst erste Positions- und Orientierungsdaten mit Bezug auf ein systemeigenes dreidimensionales Koordinatensystem 11. Entsprechend erfasst das zweite unreferenzierte Lageerfassungssystem zweite Positions- und Orientierungsdaten mit Bezug auf ein systemeigenes dreidimensionales Koordinatensystem 12. Hierbei erfasst die erste Kamera 8 und die zweite Kamera 9 jeweils Bilddaten in einem zweidimensionalen kameraeigenen Koordinatensystem 13, 14, wobei die Bilddaten in diesen Koordinatensystemen 13, 14 dann von einer weiteren Steuer- und Auswerteeinrichtung 10 in das systemeigene dreidimensionale Koordinatensystem 12 umgerechnet werden. Somit werden erste Positions- und/oder Orientierungsdaten von dem Inertialsensor 7 und Bilddaten von den Kameras 8, 9 des Stereokamerasystems an die weitere Steuer- und Auswerteeinrichtung 10 übertragen, die aus den Ausgangssignalen Positions- und/oder Orientierungsinformationen berechnet, wobei die in den Ausgangssignalen des Inertialsensors 7 kodierten ersten Positions- und/oder Orientierungsdaten mit den in den Bilddaten der Kameras 8, 9 kodierten Positions- und/oder Orientierungsdaten miteinander fusioniert werden. Die berechneten Positions- und/oder Orientierungsinformationen können z.B. referenziert zu einem vermessungsanordnungsfesten Koordinatensystem 15 sein. Hierbei kann die Auswerte- und Recheneinrichtung 10 auch Methoden der Bildverarbeitung durchführen. Weiter werden sowohl die von der ersten Steuer- und Auswerteeinrichtung 4 als auch die von der weiteren Steuer- und Auswerteeinrichtung 10 bestimmten Daten in einer Speichereinrichtung 16 referenziert zueinander gespeichert. Somit sind also vorverarbeitete Messdaten räumlich referenziert zu einem gemeinsamen Koordinatensystem, nämlich dem vermessungsanordnungsfesten Koordinatensystem 15, des Inertialsensors 7 und des Stereokamerasystems gespeichert. Das vermessungsanordnungsfeste Koordinatensystem 15 ist hierbei lage- und rotationsfest gegenüber der Vermessungsanordnung 1.

Das sensorische System 2 und die Elemente des kombinierten Lageerfassungssystems 6 sind ebenfalls orts- und drehfest zueinander auf oder in der Vermessungsanordnung 1 angeordnet. Insbesondere sind auch die Kameras 8, 9 sowie der Initialsensor 7 orts- und drehfest zueinander angeordnet. Dies bedeutet, dass sich eine Registrierung zwischen den einzelnen Ausgangsdaten während des Betriebes nicht ändert.

Auch können das sensorische System 2 und die Elemente des kombinierten Lageerfassungssystems 6 mechanisch lose gekoppelt sein, z.B. wenn es die Anforderungen an die Genauigkeit der räumliche Referenzierung zulassen. Mechanisch lose kann beispielsweise bedeuten, dass die mechanische Kopplung derart ausgebildet ist, dass sich eine Position des sensorischen Systems 2 immer innerhalb eines Kugelvolumens mit einem vorbestimmten Radius befindet, wobei ein Mittelpunkt des Kugelvolumens referenziert zu den Positions- und/oder Orientierungsinformationen bekannt ist. Dies gestattet beispielsweise eine Feuchtemessung per Hand direkt an einer Schiffswand.

Die weitere Steuer- und Auswerteeinrichtung 10 kann hierbei in Echtzeit eine Lage in drei translatorischen und drei rotatorischen Freiheitsgraden, bezogen auf das vermessungsanordnungsfeste Koordinatensystem 115, bestimmen. Zusätzlich kann die weitere Steuer- und Auswerteeinrichtung 10 aus den Ausgangssignalen der Kameras 8, 9 ein 3D-Modell erzeugen. Informationen des 3D-Modells können ebenfalls in der Speichereinrichtung 16 räumlich referenziert gespeichert werden.

Die Figur 1a zeigt eine Inspektionskameraeinheit 101, welche auf einem Arbeitshelm 102 befestigt ist. Die genaue Art der Befestigung der Inspektionskameraeinheit 101 am Arbeitshelm 102 ist der Darstellung gemäß Figur 1a nicht zu entnehmen. Sie kann in beliebiger, dem Fachmann wohl bekannter Weise erfolgen.

Die Inspektionskameraeinheit 1a weist einen Gehäuserahmen 103 auf, auf welchem diverse Einzelkomponenten, welche nachstehend näher beschrieben werden, in festen Positionen zueinander angebracht sind.

Zum einem ist an dem Gehäuserahmen 103 eine Inspektionskamera 104 befestigt. Die Inspektionskamera 104 ist als digitale Farbkamera mit geeigneter Auflösung ausgestaltet.

Weiterhin ist auf dem Gehäuserahmen 103 eine Stereokamera 105 fixiert. Die Stereokamera 105 weist eine erste Referenzierungskamera 106 und eine in einem Abstand 107 zur ersten Referenzierungskamera 106 parallel zu dieser angeordnete zweite Referenzierungskamera 108 auf. Die erste Referenzierungskamera 106 und die zweiter Referenzierungskamera 108 sind jeweils als digitale infrarotsensitive schwarz/weiß Kameras ausgestaltet, welche also lediglich einen Intensitätswert pro Bildpunkt aufzeichnen. Jeder Referenzierungskamera 106, 108 ist eine gepulst ansteuerbare Infrarotlichtquelle 109 bzw. 110 zugeordnet. Eine Bildeintrittsebene bei der Referenzierungskamera 106 und 108 ist deckungsgleich. Die Bildeintrittsebene der Referenzierungskameras 106, 108 liegt jedoch vor einer Bildeintrittsebene der Inspektionskamera 104. Diese Verhältnisse sind in der perspektivischen Ansicht gemäß Figur 1a zu erkennen.

Die Inspektionskamera 104 ist zwischen der ersten Referenzierungskamera 106 und der zweiten Referenzierungskamera 108 auf einer zentralen Verbindungslinie 110 zwischen den Referenzierungskameras 106, 108 derart angeordnet, dass die optischen Achsen der Referenzierungskameras 106, 108 parallel zur optischen Achse des Stereokamera 105 ausgerichtet sind.

An dem Gehäuserahmen 103 ist ferner eine Lichtquelle 111 zur Ausleuchtung mit sichtbarem Licht angeordnet. Die sichtbare Lichtquelle 111 ist über eine nicht dargestellte Steuerung der Inspektionskamera 104 mit der Inspektionskamera 104 synchron nach Art eines Blitzlichtes betreibbar.

In dem Gehäuserahmen 103 sind ferner eine Bildverarbeitungseinheit zur Durchführung eines Bildvergleichs eines mit der ersten Referenzierungskamera 106 aufgenommenen ersten Referenzierungsbildes mit einem parallel mit der zweiten Referenzierungskamera 108 aufgenommenen zweiten Referenzierungsbildes befestigt. Außerdem ist am Gehäuserahmen 103 eine Speichereinheit zum Abspeichern einer zeitlichen Reihe von Inspektionsfotos der Inspektionskamera 104 sowie einer zeitlichen Reihe von Ortsdaten der Inspektionskamera 104 und Orientierungsdaten der Inspektionskamera 104 vorgesehen. Die Speichereinheit und die Bildverarbeitungseinheit sind in der Figur 1a nicht zu erkennen. Sie können im Rahmen der Erfindung insbesondere in einer separaten portablen Einheit, die beispielsweise nach Art eines Rucksacks ausgestaltet sein kann, vorgesehen sein.

Außerdem weist die Inspektionskameraeinheit 101 einen an dem Gehäuserahmen 103 befestigten Beschleunigungssensor 112 sowie einen ebenfalls an dem Gehäuserahmen 103 befestigten Neigungssensor 113 auf. Der Beschleunigungssensor 112 ist beispielsweise auf Basis eines pieoelektischen Sensors aufgebaut. Der Neigungssensor 113 kann in jeder dem Fachmann wohl bekannten Art ausgestaltet sein. Beispielsweise können im Rahmen der Erfindung kapazitive Flüssigkeitsneigungssensoren eingesetzt werden. Schließlich ist auf dem Gehäuserahmen 103 ein Laserpointer 124 angebracht, welcher ein Fadenkreuz an einem Objekt im Innenraum 121 anzeigt, zur Markierung des Mittelpunkts des Objektbereichs, welches von einem Inspektionsfoto 122 erfasst wird, wenn ein Inspektionsfoto 122 aufgenommen wird.

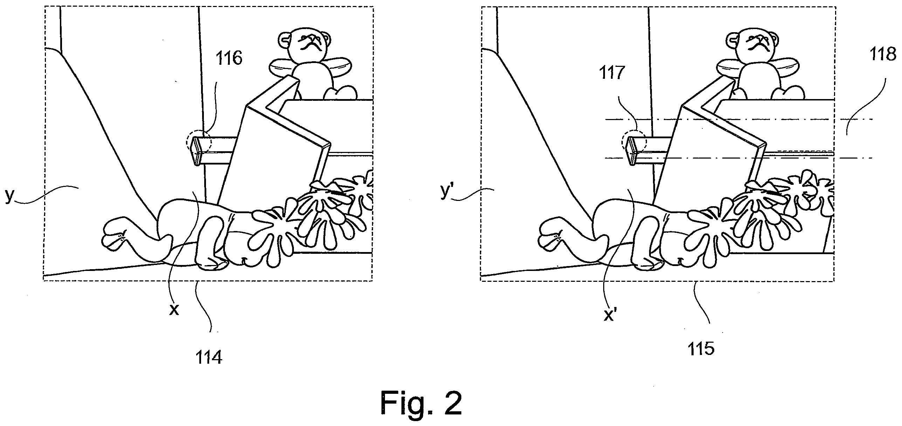

In der Figur 2 ist beispielhaft das der erfindungsgemäßen Inspektionskameraeinheit 101 zugrundeliegende Prinzip zur Bestimmung von Ortsdaten und Orientierungsdaten anhand eines Bildvergleichs eines mit der ersten Referenzierungskamera 106 aufgenommenen ersten Referenzierungsbildes 114 mit einem parallel mit der zweiten Referenzierungskamera 108 aufgenommenen zweiten Referenzierungsbildes 115 gezeigt. In Figur 2 sind die Referenzierungsbilder 114, 115 in einer Graustufendarstellung zur Veranschaulichung der zu einem Bildpunkt gehörenden Intensität des Infrarotlichtes dargestellt.

In einem ersten Schritt wird in dem ersten Referenzierungsbild 114 ein Auswertemuster 116 ausgewählt. Das Auswertemuster 116 betrifft einen Bildbereich mit einem maximalen Kontrast, nämlich den Übergang von schwarz nach weiß. Im zweiten Schritt wird das Auswertemuster 116 in dem parallel aufgenommenen zweiten Referenzierungswert 115 aufgesucht, entsprechend dem parallelen Auswertemuster 117. Anschließend wird eine Position des Auswertemusters 116 innerhalb des ersten Referenzierungsbildes 114 ermittelt und die zu dieser Position gehörenden Koordinaten (x,y) werden aufgezeichnet. Entsprechend wird eine Position des parallelen Auswertemusters 117 innerhalb des zweiten Referenzierungsbildes 115 ermittelt und mit den Koordinaten (x',y') aufgezeichnet.

Unter Berücksichtigung der geometrischen relativen Anordnung der ersten Referenzierungskamera 106 zu der zweiten Referenzierungskamera 108 sowie gegebenenfalls unter Berücksichtigung von Daten des Beschleunigungssensors 112 und/oder des Neigungssensors 113 kann gemäß der Erfindung der Bildvergleich beim Aufsuchen des parallelen Auswertemusters 117 in dem zweiten Referenzierungsbild 115 auf einen im wesentlichen linienartigen bzw. rechteckartigen Bereich 118 beschränkt werden, um die Rechenzeit zu vermindern.

Anhand der durch die Koordinaten (x,y) bzw. (x', y') -charakterisierten Positionen des Auswertemusters 116 im ersten Referenzierungsbild 114 bzw. des parallelen Auswertemusters 117 im zweiten Referenzierungsbild 115 wird anhand triogonometrischer Berechnungen unter Berücksichtigung des Abstands 107 zwischen der ersten Referenzierungskamera 106 und der zweiten Referenzierungskamera 108 Ort und Orientierung der Stereokamera 105 und aufgrund der bekannten Anordnung der Inspektionskamera 104 relativ zur Stereokamera 105 auch der Inspektionskamera 104 vorgenommen.

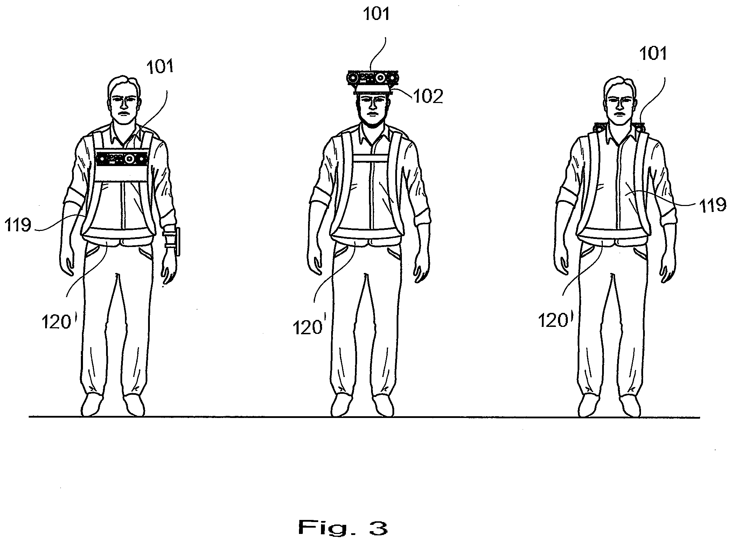

In Figur 3 sind unterschiedliche Befestigungsmöglichkeiten im Rahmen der Erfindung der Inspektionskameraeinheit 101 gemäß Figur 1a rein schematisch gezeigt. Links im Bild ist veranschaulicht, dass die Inspektionskameraeinheit 101 an einer Art Weste 119 im Brustbereich eines Inspektors 120 befestigt sein kann.

Im mittleren Teil der Figur 3 ist eine Anbringung der erfindungsgemäßen Inspektionskameraeinheit 101 auf einem Arbeitshelm 102 veranschaulicht. Schließlich zeigt der rechte Teil der Figur 3 die Anbringung der erfindungsgemäßen Inspektionskameraeinheit 101 an einer Weste 119 im Nackenbereich des Inspektors 120.

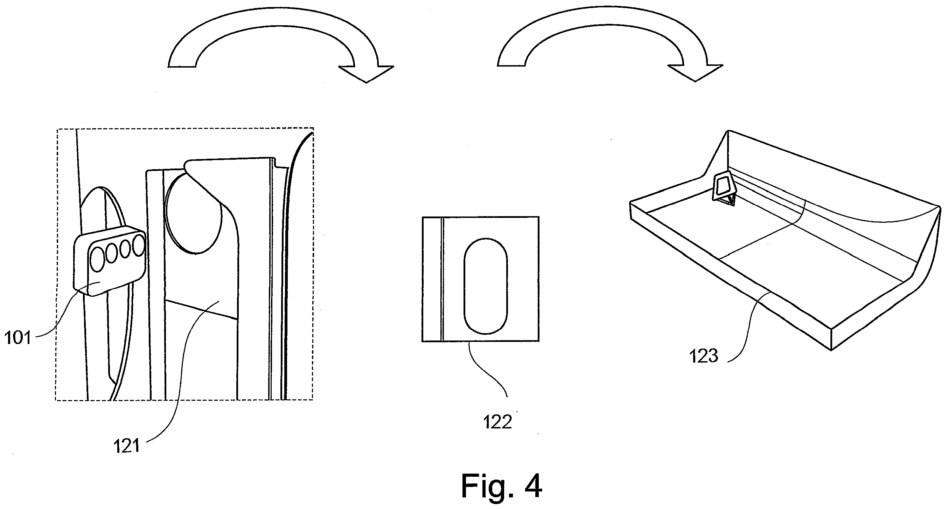

In Figur 4 ist veranschaulicht, wie im Rahmen der Erfindung eine Registrierung, d.h. Ausrichtung der im Rahmen der von der Inspektionskameraeinheit 101 nach der Erfindung gewonnenen Referenzierungsdaten anhand eines externen Models des Innenraums, beispielsweise eines Schiffes, erfolgt. Dazu wird mit der Inspektionskameraeinheit 101 in dem zu inspizierenden Innenraum 121 ein Inspektionsfoto 122 einmalig manuell einem dreidimensionalen Model 123 des Innenraumes 121 zugeordnet.

Anhand der Figuren 1a - 4 ist somit eine Inspektionskameraeinheit 101 sowie ein Verfahren zur Inspektion von Innenräumen 121 vorgeschlagen, welche mit Vorteil eine Zuordnung der gewonnenen Inspektionsfotos 122 zu einem existierenden dreidimensionalen Modell 123 ermöglichen. Der Nutzen der Inspektionsfotos 122 erhöht sich dadurch erheblich. Beispielsweise können Historienenbetrachtungen durch Vergleich von zu unterschiedlichen Zeitpunkten aufgenommenen Inspektionsfotos 122 vorgenommen werden, da feststellbar ist, welche Inspektionsfotos 122 denselben Bereich des Innenraums 121 zeigen. Für die Feststellung kann auch ein bekannter Öffnungswinkel der Inspektionskamera 104 berücksichtigt werden, welcher Anhand der Kenntnis von Lage und Orientierung der Inspektionskamera 104 einen Blickkegel definiert, dessen Schnittebene mit dem dreidimensionalen Modell 123 des Innenraumes 121 den erfassten Objektbereich angibt.

Hierdurch ist mit Vorteil eine Inspektionskameraeinheit sowie ein zugehöriges Verfahren geschaffen, welches sich im Innenraum einsetzen lassen, wo in der Regel ein Zugriff auf beispielsweise satellitengestützte Positionsbestimmungsverfahren nicht möglich ist. Zudem muss der Innenraum nicht zuvor mit Vorrichtungen versehen werden, welche eine Ortung ermöglichen.

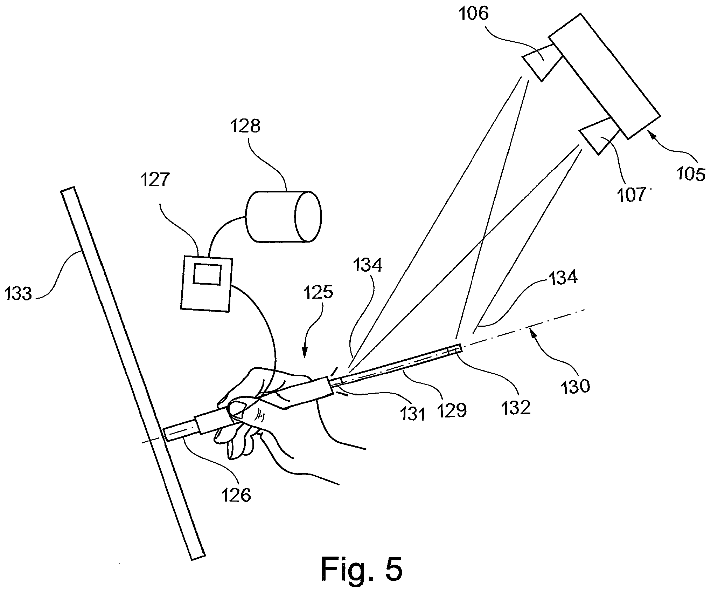

Die Figur 5 veranschaulicht schematisch die Durchführung einer Dickenmessung mit einer erfindungsgemäßen Sensoreinheit 125 zur Ultraschalldickenmessung. Die Sensoreinheit 125 weist einen Ultraschalldickemesssensor 126, eine Sensorbedienungseinheit 127, einen Sensordatenspeicher 128 sowie einen Lagegeber 129 auf. In dem in Figur 5 veranschaulichten Ausführungsbeispiel sind die Sensorbedienungseinheit 127 und der Sensordatenspeicher 128 über ein Kabel mit der Einheit aus dem Sensorkopf 126 und dem Lagegeber 129 verbunden. Dies eröffnet die Möglichkeit, die Sensorbedienungseinheit 127 und den Sensordatenspeicher 128 beispielsweise in einem Rucksack, den eine Bedienperson auf dem Rücken trägt, anzuordnen, um die den eigentlichen Sensorkopf 126 enthaltende Einheit leicht und dadurch gut handhabbar auszugestalten.

Der Lagegeber 129 ist in Verlängerung des Sensorkopfes 126 sich an diesen anschließend auf der Sensorkopfachse 130 angeordnet. Der Lagegeber 129 weist zwei voneinander entlang der Sensorkopfachse 130 beabstandet angeordnete Leuchtdioden 131, 132 auf. Die Leuchtdioden 131, 132 sind mit der Sensorbedienungseinheit 127 derart verbunden, dass bei Auslösung der Speicherung eines Messsignals des Sensorkopfes 126 in dem Sensordatenspeicher 128 die Leuchtdioden 131, 132 kurzzeitig eingeschaltet werden. Die Leuchtdioden senden gemäß dem in Figur 5 veranschaulichten Ausführungsbeispiel Infrarotlicht aus.

Die in Figur 5 veranschaulichte Sensoreinheit 125 wirkt bei bestimmungsgemäßem Gebrauch mit einer infrarotsensitiven Stereokamera 105 als Bestandteil einer Inspektionskameraeinheit 101 beispielsweise gemäß Figur 1a wie folgt zusammen.

Wenn über die Sensorbedienungseinheit 127 die Speicherung eines Messsignals des Sensorkopfes 126 zur Ultraschalldickemessung eines zu vermessenden Objekts, wie zum Beispiel einer Stahlplatte 133, ausgelöst wird, werden die Leuchtdioden 131, 132 kurzzeitig eingeschaltet. Die Leuchtdioden 131, 132 strahlen dann Infrarotlicht 134 ab.

Die Referenzierungskameras 106, 107 der Stereokamera 105 als Bestandteil einer Inspektionskamera 101 nehmen sodann die Sensoreinheit 125 jeweils auf. Dabei weisen aufgrund des abgestrahlten Infrarotlichts 134 die die Leuchtdioden 131, 132 aufweisenden Abschnitte des Lagegebers 129 einen erhöhten Kontrast auf. Aufgrund des erhöhten Kontrasts ist es der Stereokamera 105 anhand des weiter oben beschriebenen Verfahrens möglich, Ort und Lage des Sensorkopfs 126 der Sensoreinheit 125 zum Zeitpunkt der Auslösung der Speicherung eines Messsignals im Sensordatenspeicher 128 aufzuzeichnen. Voraussetzung ist, dass bei der Auslösung der Speicherung eines Messsignals die Sensoreinheit 125 und insbesondere der Lagegeber 129 im Sichtfeld der beiden Referenzierungskameras 106, 107 befindlich ist.

Mit Vorteil ist es mit der erfindungsgemäß ausgestalteten Sensoreinheit 125 möglich, auch Ort und Lage des Sensorkopfs 126 zum Zeitpunkt der Speicherung eines Messsignals aufzuzeichnen. Dies ermöglicht es beispielsweise im Falle einer Ultraschalldickemessung der Stahlplatte 133, dem gewonnenen Dickenmesswert eine genaue Lage und Richtung der Dickenmessung zuzuordnen. Ort und Lage werden dabei relativ zu Ort und Lage der Stereokamera 105 aufgezeichnet. Ort und Lage der Stereokamera 105 lassen sich anhand des oben beschriebenen Verfahrens mittels Referenzierung einem externen Koordinatensystem wie zum Beispiel einem Schiffskoordinatensystem zuordnen.

### BEZUGSZEICHENLISTE

- 101: Inspektionskameraeinheit
- 102: Arbeitshelm
- 103: Gehäuserahmen
- 104: Inspektionskamera
- 105: Stereokamera
- 106: erste Referenzierungskamera
- 107: Abstand
- 108: zweite Referenzierungskamera
- 109: Infrarotlichtquelle
- 110: zentrale Verbindungslinie
- 111: Lichtquelle
- 112: Beschleunigungssensor
- 113: Neigungssensor
- 114: erstes Referenzierungsbild
- 115: zweites Referenzierungsbild
- 116: Auswertemuster
- 117: paralleles Auswertemuster
- 118: rechteckartiger Teilbereich
- 119: Weste
- 120: Inspekteur
- 121: Innenraum
- 122: Inspektionsphoto
- 123: dreidimensionales Modell
- 124: Laserpointer
- 125: Sensoreinheit
- 126: Sensorkopf
- 127: Sensorbedienungseinheit
- 128: Sensordatenspeicher
- 129: Lagegeber
- 130: Sensorkopfachse
- 131: Leuchtdiode
- 132: Leuchtdiode
- 133: Stahlplatte
- 134: IR-Licht

## Patentansprüche

1. System mit einer Sensoreinheit (125) und einer Inspektionskameraeinheit (101), wobei die Sensoreinheit (125) mit Sensormitteln zur messtechnischen Erfassung mindestens einer Eigenschaft versehen ist, wobei die Sensormittel als ein Ultraschalldickemesssensor (126) ausgebildet sind und die Sensoreinheit (125) mindestens einen Lagegeber (129) zur Bestimmung einer durch relative Ortsdaten und Orientierungsdaten gekennzeichneten Lage des Ultraschalldickemesssensors (126) aufweist, wobei die Sensoreinheit (125) zur Bestimmung der durch relative Ortsdaten und Orientierungsdaten gekennzeichneten Lage mit Referenzierungsmitteln (105) der Inspektionskameraeinheit (101) zusammenwirkt, wobei der Lagegeber aus zwei voneinander beabstandet angeordneten Leuchtdioden (131, 132) aufgebaut ist, **dadurch gekennzeichnet, dass** die Leuchtdioden bei Auslösung einer Speicherung einer Ultraschalldickemessung eingeschaltet werden.

2. System nach Anspruch 1, **dadurch gekennzeichnet, dass** die Referenzierungsmittel (105) der Inspektionskameraeinheit (101) eine Stereokamera (105) mit einer ersten Referenzierungskamera (106) und einer zweiten Referenzierungskamera (108) umfassen, und die Inspektionskameraeinheit zusätzlich eine Inspektionskamera (104) zur Aufnahme von, vorzugsweise farbigen, Inspektionsphotos (122) von Innenräumen (121) aufweist.

3. System nach Anspruch 1 oder 2, **dadurch gekennzeichnet, dass** der Lagegeber (129) voneinander auf einer Sensorkopfachse (130) beabstandet angeordnete, einen optischen Kontrast hervorrufende, insbesondere punktartige, Bereiche umfasst, wobei die einen optischen Kontrast hervorrufenden Bereiche die Leuchtdioden (131, 132) aufweisen.

4. System nach einem der Ansprüche 1 bis 3, **dadurch gekennzeichnet, dass** die Leuchtdioden (131, 132) punktförmig ausgebildet sind.

5. System nach Anspruch 4, **dadurch gekennzeichnet, dass** die Leuchtdioden (131, 132) Infrarotlicht aussenden, wobei die Referenzierungsmittel (105) infrarotsensitiv ausgestaltet sind.

6. System nach Anspruch 5, **dadurch gekennzeichnet, dass** die Leuchtdioden (131, 132) kurzeitig einschaltbar sind und dadurch gepulst betreibbar sind.

7. System nach einem der Ansprüche 1 bis 6, **dadurch gekennzeichnet, dass** die Sensoreinheit (125) eine Sensorbedieneinheit (127) und einen Sensordatenspeicher (128) aufweist, wobei die Sensorbedieneinheit (127) und der Sensordatenspeicher (128) vorzugsweise über ein Kabel mit dem Ultraschalldickemesssensor (126) und dem mindestens einen Lagegeber (129) verbunden ist.

8. System nach Anspruch 7, **dadurch gekennzeichnet, dass** vorgesehen ist, die Sensorbedieneinheit (127) und den Sensordatenspeicher (128) räumlich getrennt vom Ultraschalldickemesssensor (126) anzuordnen, wobei vorzugsweise die Sensorbedieneinheit (127) und der Sensordatenspeicher (128) in einem von einer Bedienperson zu tragenden Rucksack angeordnet sind.

9. Verfahren zum Vermessen eines Objekts mit einem System nach Anspruch 7, **dadurch gekennzeichnet, dass** die Sensorbedieneinheit (127) die Speicherung eines Messsignals des Ultraschalldickemesssensors (126) in Bezug auf ein zu vermessendes Objekt (133) auslöst, wobei die Leuchtdioden (131, 132) kurzzeitig eingeschaltet werden und Infrarotlicht (134) abstrahlen, wobei eine Ultraschalldickenmessung des zu vermessenden Objekts vorgenommen wird, wobei die Leuchtdioden (131, 132) aufweisende Bereiche des Lagegebers (129) aufgrund des von den Leuchtdioden (131, 132) abgestrahlten Infrarotlichts (134) einen erhöhten Kontrast aufweisen, wodurch die Referenzierungsmittel (105) der Inspektionskameraeinheit (101) in der Lage sind, Ort und Lage des Ultraschalldickemesssensors (126) der Sensoreinheit (125) zum Zeitpunkt der Auslösung der Speicherung des Messsignals im Sensordatenspeicher (128) aufzuzeichnen, wobei dem mit Ort und Orientierung des Ultraschalldickemesssensors (126) gespeicherten Messsignal Inspektionsphotos einer Inspektionskamera (104) der Inspektionskameraeinheit (101) zugeordnet werden, wobei anschließend eine Zuordnung der relativen Ortsdaten und der Orientierungsdaten in ein externes Koordinatensystem erfolgt, und wobei das externe Koordinatensystem ein Schiffskoordinatensystem ist.

## Claims

1. A system having a sensor unit (125) and an inspection camera unit (101), the sensor unit (125) being provided with sensor means for metrologically capturing at least one property, the sensor means being implemented as an ultrasonic thickness measuring sensor (126) and the sensor unit (125) comprising at least one position encoder (129) for determining a position of the ultrasonic measuring sensor (126) **characterized by** relative location data and orientation data, the sensor unit (125) interacting with referencing means (105) of the inspection camera unit (101) for determining the position **characterized by** relative location data and orientation data, the position encoder being constructed of two light-emitting diodes (131, 132) spaced apart from each other, **characterized in that** the light-emitting diodes are switched on when the storing of an ultrasonic thickness measurement is triggered.

2. The system according to claim 1,
**characterized in that** the referencing means (105) of the inspection camera unit (101) comprise a stereo camera (105) having a first referencing camera (106) and a second referencing camera (108), and the inspection camera unit additionally comprises an inspection camera (104) for recording inspection photos (122), preferably in color, of interior spaces (121).

3. The system according to claim 1 or 2, **characterized in that** the position encoder (129) comprises regions, particularly point-like regions, for bringing about an optical contrast, said regions being disposed spaced apart from each other on a sensor head axis (130), wherein the regions for bringing about an optical contrast comprise the light-emitting diodes (131, 132).

4. The system according to any one of the claims 1 through 3, **characterized in that** the light-emitting diodes (131, 132) are punctiform.

5. The system according to claim 4, **characterized in that** the light-emitting diodes (131, 132) emit infrared light, wherein the referencing means (105) are infrared-sensitive in design.

6. The system according to claim 5, **characterized in that** the light-emitting diodes (131, 132) can be switched on for a brief time and can therefore be operated in a pulsing manner.

7. The system according to any one of the claims 1 through 6, **characterized in that** the sensor unit (125) comprises a sensor operating unit (127) and a sensor data memory (128), wherein the sensor operating unit (127) and the sensor data memory (128) are preferably connected to the ultrasonic thickness measuring sensor (126) and the at least one position encoder (129) by means of a cable.

8. The system according to claim 7, **characterized in that** it is provided to dispose the sensor operating unit (127) and the sensor data memory (128) spatially separated from the ultrasonic thickness measuring sensor (126), wherein the sensor operating unit (127) and the sensor data memory (128) are preferably disposed in a backpack to be worn by an operator.

9. A method for surveying an object by means of a system according to claim 7, **characterized in that** the sensor operating unit (127) triggers the storing of a measurement signal of the ultrasonic thickness measuring sensor (126) with respect to an object (133) to be surveyed, wherein the light-emitting diodes (131, 132) can be switched on for a brief time and emit infrared light (134), wherein an ultrasonic thickness measurement of the object to be surveyed is performed, wherein the regions of the position encoder (129) comprising light-emitting diodes (131, 132) have an increased contrast due to the infrared light (134) emitted by the light-emitting diodes (131, 132), whereby the referencing means (105) of the inspection camera unit (101) are able to record the location and orientation of the ultrasonic thickness measuring sensor (126) of the sensor unit (125) at the point in time of triggering the storing of the measurement signal in the sensor data memory (128), wherein inspection photos of an inspection camera (104) of the inspection camera unit (101) are associated with the stored measurement signal having the location and orientation of the ultrasonic thickness measuring sensor (126), wherein associating of the relative location data and orientation data in an external coordinate system takes place subsequently, wherein the external coordinate system is a ship coordinate system.

## Revendications

1. Système avec une unité de capteur (125) et une unité de caméra d'inspection (101), dans lequel
l'unité de capteur (125) est pourvue de moyens de détection destinés à détecter par une technique de mesure au moins une propriété, dans lequel les moyens de détection sont conçus comme un capteur de mesure d'épaisseur par ultrasons (126) et l'unité de capteur (125) présente au moins un capteur de position (129) destinée à définir une position du capteur de mesure d'épaisseur par ultrasons (126) **caractérisée par** des données relatives de localisation et d'orientation, dans lequel l'unité de capteur (125) coopère avec des moyens de référencement (105) de l'unité de caméra d'inspection (101) pour définir la position **caractérisée par** des données relatives de localisation et d'orientation,
dans lequel le capteur de position est élaboré à partir de deux diodes électroluminescentes (131, 132) disposées de manière espacée l'une de l'autre, **caractérisé en ce que** les diodes électroluminescentes sont activées lors du déclenchement d'une mémorisation d'une mesure d'épaisseur par ultrasons.

2. Système selon la revendication 1, **caractérisé en ce que** les moyens de référencement (105) de l'unité de caméra d'inspection (101) comprennent une caméra stéréo (105) avec une première caméra de référencement (106) et une deuxième caméra de référencement (108), et l'unité de caméra d'inspection présente en supplément une caméra d'inspection (104) destinée à prendre des photos d'inspection (122), de préférence en couleur, d'espaces intérieurs (121).

3. Système selon la revendication 1 ou 2, **caractérisé en ce**
**que** le capteur de position (129) comprend des zones, en particulier ponctuelles, disposées sur un axe de tête de capteur (130) de manière espacée les unes des autres, entraînant un contraste optique, dans lequel les zones entraînant un contraste optique présentent les diodes électroluminescentes (131, 132).

4. Système selon l'une quelconque des revendications 1 à 3, **caractérisé en ce que** les diodes électroluminescentes (131, 132) sont réalisées en forme de points.

5. Système selon la revendication 4, **caractérisé en ce que**
les diodes électroluminescentes (131, 132) émettent de la lumière infrarouge, dans lequel les moyens de référencement (105) sont configurés de manière sensible aux infrarouges.

6. Système selon la revendication 5, **caractérisé en ce que**
les diodes électroluminescentes (131, 132) peuvent être activées brièvement et peuvent fonctionner ainsi de manière pulsée.

7. Système selon l'une quelconque des revendications 1 à 6, **caractérisé en ce que** l'unité de capteur (125) présente une unité de commande de capteur (127) et une mémoire de données de capteur (128), dans lequel l'unité de commande de capteur (127) et la mémoire de données de capteur (128) sont reliées de préférence par l'intermédiaire d'un câble au capteur de mesure d'épaisseur par ultrasons (126) et l'au moins un capteur de position (129).

8. Système selon la revendication 7, **caractérisé en ce qu'**il est prévu de disposer l'unité de commande de capteur (127) et la mémoire de données de capteur (128) de manière séparée spatialement du capteur de mesure d'épaisseur par ultrasons (126), dans lequel de préférence l'unité de commande de capteur (127) et la mémoire de données de capteur (128) sont disposées dans un sac à dos à porter par un utilisateur.

9. Procédé pour mesurer un objet avec un système selon la revendication 7, **caractérisé en ce que** l'unité de commande de capteur (127) déclenche la mémorisation d'un signal de mesure du capteur de mesure d'épaisseur par ultrasons (126) concernant un objet (133) à mesurer, dans lequel les diodes électroluminescentes (131, 132) sont activées brièvement et émettent de la lumière infrarouge (134),
dans lequel une mesure d'épaisseur par ultrasons de l'objet à mesurer est réalisée, dans lequel les zones, présentant des diodes électroluminescentes (131, 132), du capteur de position (129) présentent du fait de la lumière infrarouge (134) émise par les diodes électroluminescentes (131, 132), un contraste plus élevé, ce par quoi les moyens de référencement (105) de l'unité de caméra d'inspection (101) sont en mesure d'enregistrer la localisation et le positionnement du capteur de mesure d'épaisseur par ultrasons (126) de l'unité de capteur (125) au moment du déclenchement de la mémorisation du signal de mesure dans la mémoire de données de capteur (128), dans lequel des photos d'inspection d'une caméra d'inspection (104) de l'unité de caméra d'inspection (101) sont associées au signal de mesure mémorisé avec la localisation et l'orientation du capteur de mesure d'épaisseur par ultrasons (126), dans lequel ensuite une association des données relatives de localisation et d'orientation est effectuée dans un système de coordonnées externe, et dans lequel le système de coordonnées externe est un système de coordonnées de navire.
